# EUROPÄISCHE PATENTANMELDUNG

(11) **EP 4 574 774 A1**
(43) Veröffentlichungstag der Anmeldung: **25.06.2025**
(21) Anmeldenummer: 24222290.9
(22) Anmeldetag: 20.12.2024
(51) Int. Cl.: C02F 1/52, C01B 3/08, C01F 7/57, C01F 7/741, C01G 1/06, C01G 1/10, C01G 49/10, C01G 49/14

(54) **VERFAHREN ZUR REINIGUNG VON ABWÄSSERN IN EINER KLÄRANLAGE**

(30) Priorität: 22.12.2023 AT 510512023
(71) Anmelder: Kubinger, Ulrich, 4675 Weibern (AT)
(72) Erfinder: Kubinger, Ulrich, 4675 Weibern (AT)
(74) Vertreter: Hübscher & Partner Patentanwälte GmbH

(57) **Zusammenfassung**

Verfahren zur Reinigung von Abwässern in einer Kläranlage, wobei in wenigstens einem Becken (3a,3b) und/oder in dessen Zu- und/oder Ablauf das zu reinigende Abwasser (1) mit einem Fällmittel (4) versetzt wird und wobei das Fällmittel (4) wahlweise Fe(II)X, Fe(III)X, AIX, polymere Verbindungen von diesen und/oder Komplexverbindungen von diesen umfasst. Um eine ressourcenschonende und sichere Reinigung von insbesondere industriellen und kommunalen Abwässern zu ermöglichen, wird vorgeschlagen, dass das Fällmittel (4) mittels Oxidation von elementarem Fe und/oder Al (5) in der Kläranlage bei gleichzeitiger Produktion von H₂ (7) hergestellt wird.

## Beschreibung

Die Erfindung betrifft ein Verfahren zur Reinigung von Abwässern in einer Kläranlage, wobei in wenigstens einem Becken und/oder in dessen Zu- und/oder Ablauf das zu reinigende Abwasser mit einem Fällmittel versetzt wird und wobei das Fällmittel wahlweise Fe(II)X, Fe(III)X, AIX, polymere Verbindungen von diesen und/oder Komplexverbindungen von diesen umfasst.

Zur Reinigung von Abwässern ist es üblich, nach einer mechanischen Reinigungsstufe zur Entfernung von Fest- und Schwebstoffen eine biologische Reinigungsstufe zur Entfernung von gelösten Schmutzstoffen vorzusehen. Die biologische Reinigung erfolgt hierbei meist durch Mikroorganismen und gegebenenfalls durch zusätzliche chemische Fällung mithilfe von Fällmitteln und/oder Flockungsmitteln.

Ein derartiges Fällmittel ist beispielsweise aus der EP2808306B1 bekannt, in der das Fällmittel wahlweise Fe(II)X, Fe(III)X, AIX und/oder polymeren Verbindungen von diesen umfasst, wobei X entweder Chlorid und/oder ein Sulfat und/oder ein Nitrat ist. Nachteilig daran ist allerdings, dass vor allem bei großen zu reinigenden Abwassermengen verhältnismäßig viel Fällmittel zu den dezentral angesiedelten Kläranlagen transportiert werden muss. Angesichts des geringen molaren Massenanteils der für die Fällung essentiellen Metallionen im Gegensatz zu den Gegenionen des Fällmittels mit großem molaren Massenanteil bedeutet dies allerdings, dass ein großer Anteil des Energieaufwands auf den Transport der weniger relevanten Gegenionen zurückzuführen ist, die ja in Verbindung mit den Metallionen im Fällmittel liegen. Darüber hinaus sind viele der erwähnten Substanzen im wasserfreien Zustand hochreaktiv, zum Beispiel säurebildend in Kontakt mit Luftfeuchtigkeit, weswegen der sichere Transport oft nur als wässrige Lösung möglich ist, was wiederum die zu transportierende Masse erhöht. Durch die resultierende große Gesamtmasse ist der Transport des Fällmittels mit signifikanten Kosten und Umweltbelastungen verbunden.

Der Erfindung liegt somit die Aufgabe zugrunde, ein Verfahren der eingangs geschilderten Artvorzuschlagen, das eine ressourcenschonende und sichere Reinigung von insbesondere kommunalen und industriellen Abwässern ermöglicht.

Die Erfindung löst die gestellte Aufgabe dadurch, dass das Fällmittel mittels Oxidation von elementarem Fe und/oder Al in der Kläranlage bei gleichzeitiger Produktion von H₂ hergestellt wird. Zufolge dieser Maßnahme kann das Fällmittel direkt am Einsatzort aus elementaren Metallen produziert werden. Dadurch wird der Transportaufwand reduziert, indem lediglich die relevanten elementaren Metalle ohne Wasser und Gegenionen zur Kläranlage transportiert werden müssen. Die zugeführten elementaren Metalle können beispielsweise in Form von Pellets, Spänen, Granulat, o.ä. zur Kläranlage transportiert werden, was einen besonders sicheren und einfach handzuhabenden Transportprozess bedingt. Das als Nebenprodukt hergestellte H₂ kann hierbei in die Energieversorgung der Kläranlage eingespeist werden, wodurch zusätzlich die Energiebilanz des Anlagenbetriebs verbessert wird. Insbesondere wird durch die H₂ Produktion die Energieautarkie von abgelegenen und energieintensiven Kläranlagen verbessert. Da die Oxidationsreaktion von Fe und/oder Al unter starker Wärmeentwicklung stattfindet, kann auch durch die dabei erzeugte Abwärme die Energieeffizienz der Kläranlage verbessert werden. In einer konstruktiv besonders bevorzugten Ausführungsform kann die Reaktionswärme mithilfe eines Wärmetauschers einem Heizkreislauf zugeführt werden. Ein derartiger Heizkreislauf kann beispielsweise zur Beheizung eines Faulturms genutzt werden. Vorzugsweise kann das erfindungsgemäße Verfahren zur Ausfällung von Phosphaten dienen.

Die Oxidation der elementaren Metalle kann beispielsweise mithilfe von starken Säuren, wie beispielsweise Salzsäure oder Schwefelsäure, nach folgendem Reaktionsschema erfolgen, wobei M wahlweise Fe oder Al und X beispielsweise Chlorid oder Sulfat sein kann.

M + 2 HX --> MX + H₂

Besonders günstige Reaktionsbedingungen ergeben sich durch den Einsatz einer Oxidation von elementaren Metallen, vorzugsweise Aluminium, im alkalischen Milieu. Durch Verwendung einer Base sind die Reaktionskinetik und die Reaktionsparameter wie Temperatur und Druck begünstigt. Eine basische Oxidation kann nach folgendem Reaktionsschema, beispielhaft an Aluminium gezeigt, erfolgen.

Al + 3 H₂O --> Al(OH)₃ + 1,5 H₂

Al(OH)₃ + OH⁻ --> [Al(OH)₄]⁻

Die hinzugefügte Base dient hierbei dazu, die oberflächlich gebildete, unlösliche Aluminiumoxid- und Aluminiumhydroxidschicht zum entsprechenden Aluminat zu komplexieren. Grundsätzlich sind verschiedene Hydroxidionen Quellen wie beispielsweise NaOH, KOH, Ca(OH)₂ oder eine wässrige Natriumcarbonatlösung geeignet, um das erfindungsgemäße Verfahren durchzuführen. Die Base kann für die Oxidationsreaktion vorgelegt und mit dem zu oxidierenden Metall versetzt werden. Um die Reaktandenökonomie weiter zu verbessern, kann die überschüssige Base für mehrere Reaktionszyklen genutzt werden und erst bei Erreichen eines Konzentrationsschwellwerts zur Fällmittelherstellung in der Kläranlage genutzt werden. Besonders günstige Reaktionsbedingungen ergeben sich mit NaOH als Base.

Das Gegenion X kann erfindungsgemäß wahlweise Hydroxid, Chlorid, Sulfat, Nitrat, Citrat und/oder Ascorbat sein. Erfindungsgemäß kann das Fällmittel polymerische Verbindungen von Fe(II)X, Fe(III)X und/oder AIX, wie beispielsweise Polyaluminiumchlorid, umfassen. Das Fällmittel kann auch Komplexverbindungen von Fe(II)X, Fe(III)X und/oder AIX, wie beispielsweise Na[AI(OH)4], umfassen.

Zusätzlich zu dem in der Kläranlage hergestellten Fällmittel kann für eine verbesserte Reinigung des Abwassers ein Gemisch aus wenigstens einem organischen Polymer, aus Erdalkaliionen in gelöster Form, wobei es sich bei den Erdalkaliionen um Kalziumionen und/oder Magnesiumionen handelt und aus einem Stabilisator, wie beispielsweise Citrat und/oder Ascorbinsäure, zum Einsatz kommen. Das erfindungsgemäß in der Kläranlage hergestellte Fällmittel sorgt gemeinsam mit dem Gemisch für eine effiziente Reinigung des Abwassers und kann im Becken zudosiert werden. Alternativ oder zusätzlich kann das erfindungsgemäß hergestellte Fällmittel auch im Zulauf und/oder Ablauf des Beckens zudosiert werden.

Um die mikrobiologische Aktivität und die einhergehenden Klärbedingungen im Becken bei der Herstellung des Fällmittels nicht in negativer Weise zu beeinflussen, wird vorgeschlagen, dass die Oxidation von elementarem Fe und/oder Al in einem vom wenigstens einen Becken abgetrennten Reaktionsraum erfolgt. Dadurch bleibt der pH-Wert des Beckens in einem physiologischen Bereich, wodurch der Stoffwechsel der im Becken eingesetzten Mikroorganismen unbeeinträchtigt bleibt. Durch den definierten Reaktionsraum können die Reaktionsparameter, wie Druck, Temperatur oder Reaktandenverhältnis unabhängig von dem Klärbetrieb im Becken eingestellt werden.

Je nach Auswahl der Reaktionsedukte, kann das mittels Oxidation erzeugte Reaktionsprodukt, wie beispielsweise im Fall von Na[Al(OH)₄] als Fällmittel, direkt zur Reinigung des Abwassers eingesetzt werden. Um jedoch die chemische Zusammensetzung des Fällmittels flexibel an die Klärbedingungen anpassen zu können, wird vorgeschlagen, dass nach der Oxidation von elementarem Fe und/oder Al das Reaktionsprodukt vor der Zudosierung zu dem zu reinigenden Abwasser wahlweise mit HCl, H₂SO₄, HNOs, Zitronensäure und/oder Ascorbinsäure versetzt wird. Dadurch kann in den Fällmitteln Fe(II)X, Fe(III)X und/oder AIX, das Anion X je nach Bedarf Chlorid, Sulfat, Nitrat, Citrat und/oder Ascorbat sein. Die Umsetzung mit Säure kann hierbei in einem von dem wenigstens einen Becken und von einem Reaktionsraum getrennten Säuerungsbecken stattfinden. In einer besonders bevorzugten Ausführungsform kann das Reaktionsprodukt nach einer Oxidation von Al im alkalischen Milieu, beispielsweise einer wässrigen NaOH-Lösung, Na[Al(OH)₄] sein, welches anschließend mithilfe von HCl in das Fällmittel AlCl₃ umgewandelt wird.

Um eine möglichst effiziente Klärleistung zu erreichen, wird vorgeschlagen, dass wenigstens zwei Becken vorgesehen sind, wobei ein Becken ein Vorklärbecken und ein Becken ein Belebungsbecken ist. Im Falle eines Einsatzes des erfindungsgemäßen Verfahrens in einem Vorklärbecken kann die Energieeffizienz der Kläranlage dadurch erhöht werden, dass durch die fällmittelinduzierte Mitfällung von gelösten Stoffen und Schwebstoffen einerseits die Schlammmenge und damit die Biogasproduktion erhöht und andererseits die benötigte Energie für das Einblasen von Luft in das strömungsabwärts angeordnete Belebungsbecken reduziert werden kann. Alternativ oder zusätzlich kann das erfindungsgemäß hergestellte Fällmittel im Belebungsbecken eingesetzt werden. Hierdurch wird die Menge der organischen Schmutzstoffe, die andernfalls von den Mikroorganismen im Belebungsbecken zur Gänze verstoffwechselt werden müssen, reduziert, wodurch die bei der Verstoffwechslung entstehenden CO₂ Emissionen aus dem Belebungsbecken sinken. Das Fällmittel kann auch in den Zuläufen und Abläufen der Becken zudosiert werden.

Die Energiebilanz des Klärprozesses kann dadurch verbessert werden, dass das entstehende H₂ abgezogen und anschließend wahlweise gespeichert und/oder vor Ort zur Energieerzeugung genutzt wird. Zufolge dieser Maßnahmen kann mittels Feuerung oder Stromerzeugung durch Brennstoffzellen ein Teil des Verfahrensenergieverbrauchs ausgeglichen werden. Vorzugsweise kann das H₂ zu einer existierenden Feuerungsanlage für Biogas zugeleitet werden.

Um einen möglichst ressourcenökonomischen Betrieb der Kläranlage weiter zu verbessern, wird vorgeschlagen, dass die Zudosierung von elementarem Fe und/oder Al in Abhängigkeit von erfassten Abwasserparametern erfolgt. Beispiele für erfasste Abwasserparameter sind der Volumenstrom des Abwassers in das Becken, die Phosphatkonzentration im Becken, die optische Dichte, der pH-Wert oder die elektrische Leitfähigkeit des Abwassers sein. Auf diese Weise kann die Fällmittelproduktion an die vorherrschenden Abwasserwerte angepasst werden, sodass weder eine Über- noch Unterproduktion an Fällmittel erfolgt und somit sowohl eine möglichst vollständige Fällung bei gleichzeitig niedrigem Fällmittel- und elementarem Metallverbrauch erreicht wird. Zur Erfassung der Abwasserparameter können Sensoren im Becken und/oder in einem Zulaufstrom angeordnet sein.

Die Erfindung bezieht sich auch auf eine Vorrichtung zur Durchführung eines erfindungsgemäßen Verfahrens, mit wenigstens einem einen Zu- und Ablauf aufweisenden Becken zur Aufnahme des zu reinigenden Abwassers und mit einer Zudosierungseinheit für ein Fällmittel zur Abwasserreinigung. Erfindungsgemäß ist dem wenigstens einen Becken und/oder dessen Zu- und/oder Ablaufzur Herstellung des Fällmittels ein Reaktionsraum für eine Oxidation von elementarem Fe und/oder Al bei gleichzeitiger Produktion von H₂ zugeordnet. Das wenigstens eine Becken kann mit dem Reaktionsraum strömungsverbunden sein, um eine automatisierte Steuerung zu ermöglichen. Zur Regelung der Fällmittelzugabe kann die Zudosierungseinheit mit einer Steuereinheit signalverbunden sein. Die Steuereinheit kann darüber hinaus mit im wenigstens einen Becken und/oder im Zulaufstrom angeordneten Sensoren zur Messung von Abwasserparametern signalverbunden sein, um die Zudosierungseinheit und damit die Fällmittelzugabe in Abhängigkeit der Abwasserparameter steuern zu können. Erfolgt die Zudosierung des Fällmittels im Zulauf des Beckens, so empfiehlt es sich, dass die Abwasserparameter stromaufwärts der Zudosiereinheit im Zulauf gemessen werden. In einer bevorzugten Ausführungsform sind ein Vorklärbecken und ein Belebungsbecken vorgesehen, welche jeweils eine Zudosierungseinheit für das Fällmittel umfassen. Alternativ oder zusätzlich kann die Zudosiereinheit im Zu- und oder Ablauf der jeweiligen Becken vorgesehen sein.

Um die Energieeffizienz einer erfindungsgemäßen Kläranlage zu steigern, wird vorgeschlagen, dass der Reaktionsraum eine Abzugshaube zum Abziehen des produzierten H₂ aufweist. Dadurch kann mithilfe eines Unterdrucks eine einfache und möglichst vollständige Nutzung oder Speicherung des produzierten H₂ ohne nennenswerte Diffusionsverluste ermöglicht werden. Die Abzugshaube kann hierbei entweder mit einem H₂ Speicher oder aber direkt mit einer Energiegewinnungsanlage wie beispielsweise einer Feuerungsanlage oder Brennstoffzelle verbunden sein. In einer bevorzugten Ausführungsform ist der Vorrichtung ein Faulturm zugeordnet, in welchem Biogas aus den festen Restbestandteilen des Abwassers produziert und anschließend zur Energiegewinnung verfeuert wird. In einer derartigen Ausführungsform kann die Abzugshaube das produzierte H₂ in den Biogasstrom leiten, sodass keine zusätzlich Energiegewinnungseinheit vorgesehen sein muss, sondern die bestehende Infrastruktur zur Energiegewinnung genutzt werden kann.

Um eine zügige, möglichst vollständige und ressourcenschonende Oxidation von elementarem Fe und/oder Al zu ermöglichen, kann der Reaktionsraum zur Zudosierung des elementaren Fe und/oder Al eine mit einer Steuereinheit signalverbundene Metalldosierungseinheit aufweisen. Dadurch kann in Abhängigkeit der benötigten Fällmittelmenge die umzusetzende Metallmenge dem Reaktionsraum automatisiert zugegeben werden. Eine derartige Steuereinheit kann die Zudosierung beispielsweise durch voreingestellte, empirisch ermittelte Steuerungsprogramme steuern. Eine besonders exakte Steuerung ergibt sich jedoch, wenn diese in Abhängigkeit von durch Sensoren ermittelten Abwasserparametern erfolgt. In einer bevorzugten Ausführungsform steuert die Steuereinheit sowohl die Metalldosierungseinheit zur Zudosierung des elementaren Fe und/oder Al zum Reaktionsraum als auch die Zudosierungseinheit zur Zudosierung des Fällmittels in das wenigstens eine Becken.

Um die lonenzusammensetzung des Metallsalzes frei wählen zu können, kann zwischen dem Reaktionsraum und dem wenigstens einen Becken ein Säuerungsbecken vorgesehen sein. Dadurch können je nach Bedarf durch Zugabe von HCl, H₂SO₄, HNOs, Zitronensäure und/oder Ascorbinsäure die entsprechenden Chlorid-, Sulfat-, Nitrat-, Citrat- und/oder Ascorbatsalze bereitgestellt werden. Das Säuerungsbecken kann mit dem Reaktionsraum und dem wenigstens einen Becken strömungsverbunden sein.

### Ausführungsbeispiel:

Soll das erfindungsgemäße Verfahren für eine Kläranlage mit 20.000 EW eingesetzt werden, so können als benötigtes Fällmittel 841 kg NaAl(OH)₄ / Tag angenommen werden. Dieses Fällmittel kann in ein Vorklärbecken und/oder in ein Belebungsbecken zudosiert werden.

Erfindungsgemäß wird das benötigte Fällmittel vor Ort an der Kläranlage hergestellt, in dem 193 kg Al / Tag, beispielsweise in Form von Pellets, mit 285 kg NaOH / Tag und 385 L H₂O / Tag versetzt werden, wobei NaOH und H₂O in einem Reaktionsraum als wässrige Lösung vorgelegt sein können. Als Produkte entstehen dabei, neben der benötigten Menge an dem Fällmittel NaAl(OH)₄ / Tag gemäß der Reaktionsformel

2Al + 6H₂O + 2NaOH --> 2NaAl(OH)₄ + 3H₂ ,

22 kg H₂ / Tag zur energetischen Verwertung. Das Produkt NaAl(OH)₄ kann auf Kläranlagen als Phosphat-Fällungsmittel mit dem in wässriger Lösung wirkenden Kation Al³⁺ eingesetzt werden.

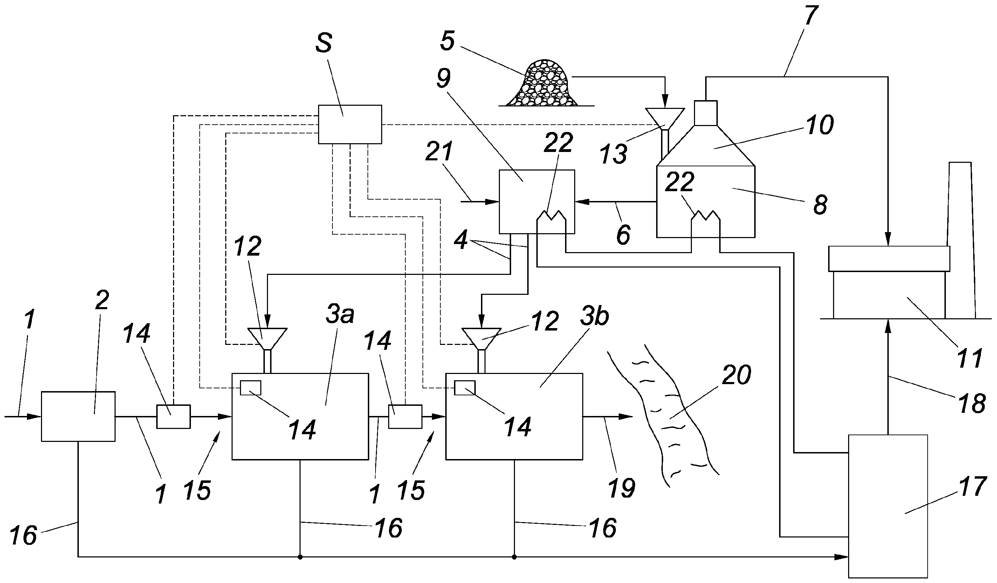

In der Zeichnung ist der Erfindungsgegenstand beispielsweise dargestellt, wobei eine schematische Darstellung einer erfindungsgemäßen Vorrichtung zur Reinigung von Abwässern gezeigt ist. Die Abwässer können insbesondere industrielle und/oder kommunale Abwässer sein.

Das erfindungsgemäße Verfahren wird anhand der erfindungsgemäßen Vorrichtung zur Reinigung von Abwässern gezeigt. Zunächst wird das zugeführte, zu reinigende Abwasser 1 in einem mechanischen Reinigungsbecken 2 von Feststoffen getrennt, um anschließend in einem Vorklärbecken 3a und in einem Belebungsbecken 3b als Becken 3a,3b, mit einem Fällmittel 4, hier AlCl₃ und/oder polymere Verbindungen davon, versetzt zu werden. Die Aluminiumionen für das Fällmittel 4 werden bereitgestellt, indem elementares Al 5, beispielsweise in Form von Pellets, mittels Oxidation im alkalischen Milieu zum Reaktionsprodukt Na[Al(OH)₄] 6 umgesetzt wird, wobei als Nebenprodukt H₂ 7 freigesetzt wird, welches energetisch genutzt werden kann. Diese Reaktion kann in einem dafür vorgesehenen Reaktionsraum 8 stattfinden, in welchem beispielsweise eine NaOH-Lösung vorgelegt und Al 5 zudosiert wird.

Zur Umwandlung des Reaktionsprodukt Na[Al(OH)₄] 6 zum Fällmittel 4 kann anschließend in einem Säuerungsbecken 9 das entsprechende Gegenion in Form einer Säure, in diesem Fall HCl 21, eingebracht werden. In einer alternativen Ausführungsform kann das Reaktionsprodukt Na[Al(OH)₄] 6 direkt und ohne Säuerung als Fällmittel 4 zum Vorklärbecken 3a und/oder dem Belebungsbecken 3b zugegeben werden. In diesem Fall kann das Säuerungsbecken 9 entfallen.

Das im Reaktionsraum 8 produzierte Nebenprodukt H₂ 7 kann mithilfe einer Abzugshaube 10 zu einer für Kläranlagen üblichen Biogasfeuerungsanlage 11 geleitet und zur Strom- und Wärmeproduktion genutzt werden.

Die Zudosierung des Fällmittels 4 in das Vorklärbecken 3a und das Belebungsbecken 3b kann mittels Zudosierungseinheiten 12 erfolgen. Außerdem kann eine Metalldosierungseinheit 13 für die Zudosierung des elementaren Al 5 in den Reaktionsraum 8 vorgesehen sein. Sowohl die Zudosierungseinheiten 12 und die Metalldosierungseinheit 13 können mit einer Steuereinheit S signalverbunden sein. Die Steuereinheit S kann die Produktion und/oder die Zudosierung des Fällmittels 4 anhand von Abwasserparametern regulieren, welche mittels Sensoren 14 im Vorklärbecken 3a und/oder im Belebungsbecken 3b und/oder im Zulaufstrom 15 erfasst werden.

Der im mechanischen Reinigungsbecken 2, im Vorklärbecken 3a und im Belebungsbecken 3b anfallende Klärschlamm 16 kann in einem Faulturm 17 zur Gewinnung von Biogas 18 genutzt werden, welches zusammen mit dem bei der Herstellung des Fällmittels 4 produzierten Nebenprodukt H₂ 7 zur Energiegewinnung genutzt werden kann. Nach der Reinigung des Abwassers 1 kann das geklärte Wasser 19 in den natürlichen Wasserkreislauf 20 reintegriert werden.

Die Wärmeentwicklung der stark exothermen Reaktionen im Reaktionsraum 8 und im Säuerungsbecken 9 können mithilfe eines Wärmetauschers 22 zur Heizung des Faulturms 17 genutzt werden.

## Patentansprüche

1. Verfahren zur Reinigung von Abwässern in einer Kläranlage, wobei in wenigstens einem Becken (3a,3b) und/oder in dessen Zu- und/oder Ablauf das zu reinigende Abwasser (1) mit einem Fällmittel (4) versetzt wird und wobei das Fällmittel (4) wahlweise Fe(II)X, Fe(III)X, AIX, polymere Verbindungen von diesen und/oder Komplexverbindungen von diesen umfasst, **dadurch gekennzeichnet, dass** das Fällmittel (4) mittels Oxidation von elementarem Fe und/oder Al (5) in der Kläranlage bei gleichzeitiger Produktion von H₂ (7) hergestellt wird.

2. Verfahren nach Anspruch 1, **dadurch gekennzeichnet, dass** die Oxidation von elementarem Fe und/oder Al (5) in einem von dem wenigstens einen Becken (3a,3b) abgetrennten Reaktionsraum (8) erfolgt.

3. Verfahren nach Anspruch 1 oder 2, **dadurch gekennzeichnet, dass** nach der Oxidation von elementarem Fe und/oder Al (5) das Reaktionsprodukt (6) vor der Zudosierung zu dem zu reinigenden Abwasser (1) wahlweise mit HCl, H₂SO₄, HNOs, Zitronensäure und/oder Ascorbinsäure versetzt wird.

4. Verfahren nach einem der Ansprüche 1 bis 3, **dadurch gekennzeichnet, dass** wenigstens zwei Becken (3a,3b) vorgesehen sind, wobei ein Becken (3a,3b) ein Vorklärbecken (3a) und ein Becken ein Belebungsbecken (3b) ist.

5. Verfahren nach einem der Ansprüche 1 bis 4, **dadurch gekennzeichnet, dass** das entstehende H₂ (7) abgezogen und anschließend wahlweise gespeichert und/oder vor Ort zur Energieerzeugung genutzt wird.

6. Verfahren nach einem der Ansprüche 1 bis 5, **dadurch gekennzeichnet, dass** die Zudosierung von elementarem Fe und/oder Al (5) in Abhängigkeit von erfassten Abwasserparametern erfolgt.

7. Vorrichtung zur Durchführung eines Verfahrens nach einem der Ansprüche 1 bis 6, mit wenigstens einem einen Zu- und Ablauf aufweisenden Becken (3a,3b) zur Aufnahme des zu reinigenden Abwassers (1) und mit einer Zudosierungseinheit (12) für ein Fällmittel (4) zur Abwasserreinigung, **dadurch gekennzeichnet, dass** zur Herstellung des Fällmittels (4) dem wenigstens einen Becken (3a,3b) und/oder dessen Zu- und/oder Ablauf ein Reaktionsraum (8) für eine Oxidation von elementarem Fe und/oder Al (5) bei gleichzeitiger Produktion von H₂ (7) zugeordnet ist.

8. Vorrichtung nach Anspruch 7, **dadurch gekennzeichnet, dass** der Reaktionsraum (8) eine Abzugshaube (10) zum Abziehen des produzierten H₂ (7) aufweist.

9. Vorrichtung nach Anspruch 7 oder 8, **dadurch gekennzeichnet, dass** zur Zudosierung des elementaren Fe und/oder Al (5) der Reaktionsraum (8) eine mit einer Steuereinheit (S) signalverbundene Metalldosierungseinheit (13) aufweist.

10. Vorrichtung nach einem der Ansprüche 7 bis 9, **dadurch gekennzeichnet, dass** zwischen dem Reaktionsraum (8) und dem wenigstens einen Becken (3a,3b) ein Säuerungsbecken (9) vorgesehen ist.
